# EUROPÄISCHE PATENTANMELDUNG

(11) **EP 4 138 282 A1**
(43) Veröffentlichungstag der Anmeldung: **22.02.2023**
(21) Anmeldenummer: 21191716.6
(22) Anmeldetag: 17.08.2021
(51) Int. Cl.: H02K 15/03, H02K 1/04, H02K 1/276

(54) **VERFAHREN ZUR HERSTELLUNG EINES ROTORS EINER PERMANENTERREGTEN DYNAMOELEKTRISCHEN MASCHINE**

(71) Anmelder: Siemens Aktiengesellschaft, 80333 München (DE)
(72) Erfinder: Büttner, Klaus, 97618 Hollstadt (DE); Katzenberger, Tobias, 97631 Bad Königshofen STT Untereßfeld (DE); Kirchner, Klaus, 97645 Ostheim (DE); Plochmann, Bastian, 91413 Neustadt an der Aisch (DE); Warmuth, Matthias, 97618 Windshausen (DE)

(57) **Zusammenfassung**

Die Erfindung betrifft ein Verfahren zur Herstellung eines Rotors (5), insbesondere einer permanenterregten dynamoelektrischen Maschine (1) durch folgende Schritte:
- Paketieren eines Blechpakets des Rotors (5), insbesondere Stanzpaketieren mit im Wesentlichen axial verlaufenden Ausnehmungen zur Aufnahme von Permanentmagneten (9), wobei die Ausnehmungen Taschen (10), Halteelemente und Flusssperren (13) aufweisen,
- Einbringen der Permanentmagneten (9) in die Taschen (10),
- zusätzliches axiales Paketieren des Blechpakets mittels zumindest einer Verteilscheibe (16) an einer Stirnseite des Blechpakets, wobei die Verteilscheibe (16) zumindest eine Zuführung (15) und zumindest einen Ringkanal (18) aufweist,
- Zuführen einer thixotropischen Vergussmasse (20) unter einem vorgebbaren Druck über die Zuführung (15) der Verteilscheibe (16), über den Ringkanal (18) in den Raum, den die Permanentmagnete (9) in den Ausnehmungen nicht einnehmen, solange, bis zumindest sämtliche axial verlaufende Spalte (12) ausgefüllt sind oder bis die Ausnehmungen "voll" sind.

## Beschreibung

Die Erfindung betrifft ein Verfahren zur Herstellung eines Rotors einer permanenterregten dynamoelektrischen Maschine, einen damit hergestellten Rotor, eine Vergussmasse zur Herstellung eines derartigen Rotors, eine permanenterregte dynamoelektrischen Maschine mit einem derartigen Rotor als auch eine Verwendung einer permanenterregten dynamoelektrischen Maschine.

Industrielle Niederspannungsmotoren (<1KV Nennspannung) vor allem in den Wirkungsgradklassen IE4 und höher, werden üblicherweise mit Permanentmagnetrotoren gefertigt. Dabei werden die Permanentmagnete in die hierfür vorgesehen Taschen des Blechpakets des Rotors eingebracht (sogenannte vergrabene Permanentmagnete). Die geometrischen Abmessungen dieser Taschen müssen hierbei gegenüber den Permanentmagneten ein Übermaß aufweisen, um das Einbringen der Permanentmagnete zu ermöglichen.

Nach dem Einbringen der Permanentmagnete in die Taschen müssen diese Permanentmagnete mechanisch mit dem Blechpaket des Rotors fixiert werden. Damit soll ein Spiel vermieden werden, das bei mechanischen Einwirkungen wie Vibrationen, Fliehkräften während des Betriebs der permanenterregten dynamoelektrischen Maschine oder aufgrund von Magnetkräften eine Positionsänderung der Permanentmagnete verursacht.

Üblicherweise werden die Permanentmagnete hierfür mittels eines reaktiven Kunststoffklebers in die Taschen geklebt. Hierfür gibt es mehrere Vorgehensweisen, welche üblicherweise angewandt werden.

Eine Möglichkeit ist das vorherige Einbringen eines pastösen Klebstoffes in die Tasche, welcher dann durch den später eingeschobenen Permanentmagneten derart verdrängt wird, dass er sich um den Permanentmagneten schmiegt. Dieses Einsetzen der Permanentmagnete in das pastöse Material führt allerdings zu einer gewissen Positionsungenauigkeit, da sich die verdrängte Paste nicht gleichförmig um den Magneten schmiegt und sich somit nur punktuelle Verklebungen einstellen. Das Handling der aufmagnetisierten Permanentmagnete ist dabei nicht trivial und kann aufgrund der Magnetkräfte nicht ordentlich, in der wünschenswerten Weise, durchgeführt werden, ohne dass nach jedem Magneteinschub das Werkzeug einer Hilfsvorrichtung von der voreingebrachten Klebe-Paste gereinigt werden muss.

Eine weitere Möglichkeit die Permanentmagnete in der Tasche zu fixieren ist das spätere Vergießen der mit den Permanentmagneten bestückten Taschen mittels eines reaktiven Harzes, welches im Anschluss durch thermische Einwirkung (Ofen, z.B. 140°C für 2h) gehärtet werden muss. Zum einen ist hierbei das Aufheizen und Abkühlen des gesamten Rotors ein zeit- und kostspieliger Prozessschritt, welcher umgangen werden sollte.

Des Weiteren können derartige Temperaturen zu einer Teilentmagnetisierung der Permanentmagnete führen.

Des Weiteren ist es dabei notwendig das Bauteil im Vorfeld adäquat abzudichten, um zu verhindern, dass das flüssige Reaktivharz aus den dafür vorgesehen Bereichen austreten kann. Dies ist zum einen an den Stirnseiten des Rotorblechpaketes notwendig, aber auch auf der außenliegenden Mantelfläche des Rotors, da es in Bereichen dünner Wandungen (<1mm) die für den optimalen magnetischen Fluss notwendig sind, zum Durchdringen der Einzelbleche kommt und somit zu Verunreinigung und Tropfnasenbildung auf der äußeren Mantelfläche. Um zu verhindern, dass in einem nachgelagerten Prozessschritt diese Flächen aufwändig gereinigt und nachbearbeitet werden müssen, wird im Vorfeld die Mantelfläche des Rotors durch einen Lackiervorgang versiegelt. Hierbei wird ebenfalls ein hochtemperaturhärtender Lack verwendet, was zu einem zusätzlichen Prozessschritt und einem weiteren Aufheiz- und Abkühlzyklus führt.

Ausgehend davon liegt der Erfindung die Aufgabe zugrunde einen Rotor einer permanenterregten dynamoelektrischen Maschine bereitzustellen, dessen Herstellung vergleichsweise einfach ist, und die weniger aufwändige Prozessschritte erfordert. Der damit hergestellte Rotor soll bei einer permanenterregten dynamoelektrischen Maschine die erforderliche Wirkungsgradklasse einhalten und damit für die Verwendungsfälle der Maschine vergleichsweise günstige Verbrauchsdaten liefern.

Die Lösung der gestellten Aufgabe gelingt durch ein Verfahren zur Herstellung eines Rotors, insbesondere einer permanenterregten dynamoelektrischen Maschine durch folgende Schritte:
- Paketieren eines Blechpakets des Rotors, insbesondere stanzpaketieren mit im Wesentlichen axial verlaufenden Ausnehmungen zur Aufnahme von Permanentmagneten, wobei die Ausnehmungen Taschen, Halteelemente und Flusssperren aufweisen,
- Einbringen der Permanentmagneten in die Taschen,
- zusätzliches axiales Paketieren des Blechpakets mittels zumindest einer Verteilscheibe an einer Stirnseite des Blechpakets, wobei die Verteilscheibe zumindest eine Zuführung und zumindest einen Ringkanal aufweist,
- Zuführen einer thixotropischen Vergussmasse unter einem vorgebbaren Druck über die Zuführung der Verteilscheibe, über den Ringkanal in den Raum, den die Permanentmagnete in den Ausnehmungen nicht einnehmen, solange, bis zumindest sämtliche axial verlaufende Spalte ausgefüllt sind oder bis die Ausnehmungen "voll" sind.

Die Lösung der gestellten Aufgabe gelingt durch eine Vergussmasse zur Fixierung von Permanentmagneten in einem Rotor einer permanenterregten Synchronmaschine, wobei als Basisharzmaterial ein Zwei-Komponenten-Reaktivharz ist, in dem in einer vorgebbaren Menge wärmeleitfähige und/oder eine Gelierzeit der Vergussmasse beeinflussende Additive vorhanden sind. Die Lösung der gestellten Aufgabe gelingt auch durch einen Rotor einer permanenterregten Synchronmaschine, hergestellt nach dem erfindungsgemäßen Verfahren, wobei die Oberfläche des Rotors frei von einer Lackierschicht oder Vergussmasse ist und die axial verlaufenden Ausnehmungen mit Permanentmagneten oder mit Vergussmasse gefüllt sind, und Endscheiben/Verteilscheiben aufweisen.

Die Lösung der gestellten Aufgabe gelingt durch eine permanenterregte dynamoelektrische Maschine mit einem erfindungsgemäßen Rotor.

Die Lösung der gestellten Aufgabe gelingt auch durch die Verwendung einer erfindungsgemäßen permanenterregten Synchronmaschine, insbesondere als integrierter Direktantrieb bei Kompressorantrieben, Verdichterantrieben, Lüfterantrieben und als Antriebe in der Nahrungsmittelindustrie und bei maritimen Anwendungen.

Erfindungsgemäß gelingt die Lösung der gestellten Aufgabe durch ein Verfahren zur Herstellung des Rotors, insbesondere einer permanenterregten dynamoelektrischen Synchronmaschine, durch die Nutzung einer thixotropischen Vergussmasse zur Fixierung und Positionierung der Permanentmagnete in einem Blechpaket des Rotors.

Ausnehmung sind dabei Ausstanzungen der Bleche, die paketiert, axial hintereinander angeordnet sind. Die Ausnehmungen weisen sowohl Taschen als auch die Flusssperren auf. Die Taschen sind zur Aufnahme der oder des Permanentmagneten vorgesehen. In den Raum der Ausnehmungen ragen optional Stege und/oder Haltenasen zur ergänzenden Fixierung und Halterung der Permanentmagnete während der Fertigung und im Betrieb der dynamoelektrischen Maschine gegenüber Fliehkraftbeanspruchungen.

Ein Paketieren der Bleche kann auf einer Hilfswelle erfolgen. Ebenso ist es möglich die Bleche zu verkleben. Ebenso ist Stanzpaketieren der Bleche möglich, um ein Blechpaket zu erhalten in das die Permanentmagnete einsetzbar sind.

Zusätzliches Paketieren erfolgt dann, wenn sich das Blechpaket auf der eigentlichen Welle befindet. Dabei wird das Blechpaket mittels zweier Scheiben zusammengepresst.

Zumindest eine der beiden Scheiben ist dabei eine Verteilscheibe.

Das Blechpaket und/oder die Scheiben werden vorzugsweise auf die Welle geschrumpft. Ebenso sind andere Möglichkeiten vorhanden, das Drehmoment vom Blechpaket auf die Welle zu übertragen, wie Passfederverbindungen etc. Eine Paketierung kann auch über Zugankerverbindungen erfolgen.

Die Verteilscheibe weist auf der dem Blechpaket des Rotors zugewandten Seite zumindest einen umlaufenden, zum Blechpaket hin, offenen Ringkanal auf.

Auf der dem Blechpaket abgewandten Seite der Verteilscheibe ist zumindest eine Injektionsöffnung, also eine Zuführung vorgesehen, um den Ringkanal zu speisen. Optional weist der Ringkanal im Bereich einer Flusssperre eines Pols des Rotors Erweiterungen auf, um ausreichend Vergussmasse für den jeweiligen Pol bereitstellen zu können.

Der Ringkanal und optional dessen Erweiterung schließen mit der Stirnseite des Blechpakets formschlüssig und dicht ab, um einen dementsprechenden Druck und damit die erforderlichen Scherkräfte aufbauen zu können.

Bei dem beanspruchten Verfahren weist die Vergussmasse thixotropisches Verhalten auf, wobei die Viskosität infolge eines äußeren Einflusses (z.B. Druck) abnimmt und nach beendigter Beanspruchung wieder in die Ausgangsviskosität zurücckehrt.

Bei konstanter Scherung (Druck) nimmt mit der Zeit die Viskosität der Vergussmasse ab - nach Beendigung der Scherbelastung steigt die Viskosität der Vergussmasse zeitabhängig wieder an. Durch den zunächst statischen Druck, dann aber mit der Bewegung der Vergussmasse dynamischen Drucks, wird zunächst ein viskoses Fliesen der Vergussmasse erzeugt, wodurch sich die Scherkräfte ergeben.

Eine Thixotropierung der Vergussmasse wird durch Zugabe und Dispergieren von pyrogener Kieselsäure Aerosil im Bereich zwischen 0,1-0,5 vol.-% erreicht.

Bevor die Vergussmasse über eine Leitung oder Schlauch dem Rotor über eine Verteilscheibe zugeführt wird, werden deren Bestandteile von mindestens zwei getrennt vorliegenden Komponenten durch Relativbewegung so umpositioniert, dass eine gleichmäßige und klar definierte Verteilung der zu mischenden Komponenten vorliegt.

Die Mischung von mindestens zwei Komponenten kann dabei durch einen dynamischen Mischer erfolgen, z.B. einen Speedmixer.

Eine technisch einfachere und kostengünstigere Möglichkeit stellt die statische Mischung dar.

Über die Verteilscheibe sind die Fließkanäle verästelt und somit der Weg zu den Ausnehmungen mit den Permanentmagneten vorgegeben.

Das Basisharzmaterial ist vorzugsweise ein zweikomponentiges Reaktivharz auf Basis von Epoxy/Amin oder z.B. Polyurethan/ Isocyanat. Eine Gelierung bei Raumtemperatur ist hierbei nach wenigen Minuten bis einigen Stunden einstellbar, so dass ohne zusätzliche Erwärmung (und damit einhergehender weiterer Verflüssigung des Harzgemisches) eine weitgehende Verfestigung der Masse eintritt. Mit anderen Worten, eine vollständige Härtung bei Raumtemperatur ohne Nachtemperung ist somit möglich.

Als weiteres Grundmaterial eignen sich Polysiloxane und Silikon.

Es stellt sich damit bei geringen Scherkräften (ca. 10 Pa) eine Scherviskosität von ca. 10^5-10^7 mPas ein. Bei erhöhten Scherkräften (ca. 200 Pa) tritt eine Scherviskosität von ca. 10^2-10^4 mPas ein. Diese Scherkräfte werden durch Druck in die Vergussmasse eingeleitet.

Eine Erholung des Materials, respektive der Viskosität, ergibt sich nach Abnahme der Scherkräfte (Abnahme des Druckes) innerhalb weniger Minuten, so dass es zu einer Selbstverfestigung der Vergussmasse kommt und keine Fließwege durch dünne Spalte, insbesondere zwischen den Einzelblechen des Blechpakets des Rotors mehr entstehen.

Der Volumenschrumpf eines derartig gefüllten Rotors liegt bei unter 1%. Damit werden u.a. Lunkerbildungen vermieden, die die Positionierung der Permanentmagnete und die elektromagnetischen und wärmeleitenden Eigenschaften beeinträchtigen könnten.

Die vorzugsweise raumtemperaturhärtende Vergussmasse kann, neben einem stark thixotropierten rheologischen Verhalten, durch geeignete Additive wärmeleitfähig (>0,5 W/mK) eingestellt werden. Diese Additive werden vor der Zuführung in den Rotor, insbesondere der Verteilscheibe der Vergussmasse, beigemischt. Dies führt im Betrieb der dynamoelektrischen Maschine zu einer verbesserten Wärmeabfuhr aus den Permanentmagneten, da diese durch Wirbelströme und/oder Luftspaltharmonischen aufgeheizt werden. Damit sind die Permanentmagnete mit vergleichsweise verbesserter Wärmeleitfähigkeit an das Blechpaket des Rotors gekoppelt.

Die Wärmeleitfähigkeit der Vergussmasse kann durch Zugabe oder Zumischen verschiedener Füllstoffe erreicht werden. Die dabei vorgesehenen Additive sind Quarzmehl, Quarzgut, BorNitrid (BN), Alox, Kreide. Die einzelnen Komponenten sind zusammen oder auch einzeln beimischbar und können somit bis zu 40 Vol.% der gesamten Vergussmasse ausmachen.

Vorteilhafterweise erfolgt die Bestückung des Rotors mit Vergussmasse als aufsteigender Verguss bei erhöhtem Vergussdruck.

Durch den aufsteigenden Verguss ist eine blasenfreie Applikation gewährleistet.

Hierbei wird ein statisches/dynamisches Mischrohr verwendet, um das Reaktivgemisch in situ zu mischen und direkt im Anschluss über die Verteilscheibe auf einer Stirnseite des Rotors in den Rotor zu applizieren. Es können auch auf beiden Stirnseiten des Rotors Verteilscheiben vorgesehenen sein, um eine Bestückung des Rotors von beiden Seiten vorzunehmen. Dabei sind die Verteilscheiben entweder identisch oder derart ausgebildet, dass jede Verteilscheibe lediglich die Hälfte der Pole des Rotors mit Vergussmasse versieht. Eine beidseitige Beschickung mit Vergussmasse kann vor allem bei axial langen Rotoren von Vorteil sein.

Über einen oder mehrere geeignete Injektionsanschlüsse an der Verteilerscheibe können Drücke von bis zu 10 bar, vorzugsweise 4,5 bar, appliziert werden, wodurch die frisch gemischte, thixotropierte Vergussmasse fließfähig wird und axial, insbesondere axial aufsteigend, in die verbleibenden geometrischen Zwischenräume des Rotors gelangt.

Als Zwischenräume sind dabei die Flusssperren, die Spalte zwischen den Permanentmagneten und den jeweiligen Blechen, optional Zuführkanäle aber nicht oder fast nicht die Schlitze zwischen den Einzelblechen gemeint. Mit anderen Worten, die Radialebenen zwischen den Einzelblechen soll nicht mit der Vergussmasse versehen werden und auch nicht versehen sein. Vergussmasse in diesen Radialebenen soll vermieden werden. Dabei füllt die Vergussmasse nur und ausschließlich die Ausnehmungen, die Permanentmagnete aufweisen, also die Flusssperren und die Spalte zwischen den Blechen und den Permanentmagneten, aber keine radialen Spalte zwischen den einzelnen Blechen, also die Ebenen, die senkrecht zur Achse stehen. Nach der vollständigen Befüllung der Ausnehmungen wird der Druck abgelassen. Eine Detektion, dass das Blechpaket mit den entscheidenden Zwischenräumen "voll" ist, erfolgt über den statischen im Vergleich zu dem dynamischen Druck (Detektion z.B. über Druckaufbau dynamischer vs. statischer Druck). Sobald alle Fließkanäle vollständig gefüllt sind, kommt der Fluss der Vergussmasse zum Erliegen und ist durch eine Änderung des Gesamtdrucks gemäß Bernoulli detektierbar. Bernoullische Druckgleichung (Gesamtdruck = Dynamischer Druck + Statischer Druck).

Ebenso ist eine optische Kontrolle möglich, die einen nicht gewollten Austritt an der Außenseite der Mantelfläche des zylindrischen Blechpakets detektiert, vorzugsweise bei den schmalen Stegen, die als Randbegrenzungen der Flusssperren zur Mantelfläche fungieren. Diese können, radial betrachtet, nur wenige Millimeter oder gar nur Bruchteile von Millimetern sein.

Die Vergussmasse im Rotor geliert danach drucklos bei Raumtemperatur und härtet innerhalb von 24 Stunden vollständig aus.

Eine Weiterarbeit an und mit dem Rotor ohne mechanische Belastung ist schon nach ca. 1 Stunde möglich. Ein Durchdringen des Materials, also der Vergussmasse, durch die Einzelbleche ist durch die Thixotropierung der Vergussmasse verhindert, sodass auf einen vorangehenden Lackierprozess der außenliegenden Mantelfläche verzichtet werden kann.

Eine geeignete Verteilscheibe, welche im Vergussprozess zumindest an einer Stirnseite des Blechpakets des Rotors mit vorgesehen wird, verbindet über eine oder mehrere Zuführungen an der Verteilscheibe, einen Ringkanal mit allen ggf. optional vorgesehenen Verteilkanäle, um durch eine einzige Injektion des Vergussmaterials als einen Füllvorgang den Rotor zu "befüllen".

Die Verteilscheibe erfüllt somit mehrere Funktionen; Paketieren des Blechpakets auf der Welle, Verteilung der Vergussmasse und ev. Möglichkeiten zu wuchten. Dabei wird über Materialentnahme oder zusätzlich anbringbare Wuchtgewichte die Wuchtung des Rotors vollzogen.

Diese Verteilscheibe wird formschließend, stirnseitig an das Blechpaket angebracht und kann im Nachgang auch zur Wuchtung des Rotors genutzt werden.

Erfindungsgemäß wird nunmehr der Rotor mit seinen Permanentmagneten mit einer hochgefüllten, thixotropierter Vergussmassen vergossen, welche bei Raumtemperatur geliert und vollständig härtet.

Durch die hohe Füllung und Nutzung von Thixotropieradditiven können mittels eines Druckverfahrens die Taschen aufsteigend gefüllt werden, ohne dass jedoch die Reaktivmasse durch kleine Schlitze, wie z.B. zwischen den Einzelblechen, entweichen kann.

Eine mit einem derartigen Rotor ausgestattete Synchronmaschine weist eine hohe Effizienzklasse auf und ist somit für den Antrieb vor allem für den Dauerbetrieb von Kompressoren, Verdichtern, Förderbändern, Lüfter etc. geeignet.

Die Erfindung sowie weitere vorteilhafte Ausgestaltungen der Erfindung werden anhand prinzipiell dargestellter Ausführungsbeispiele näher erläutert; darin zeigen:
- FIG 1: einen prinzipiellen Längsschnitt einer dynamoelektrischen Maschine,
- FIG 2: einen erfindungsgemäßen Rotor,
- FIG 3: eine Verteilscheibe,
- FIG 4: einen Pol eines Rotors mit Permanentmagneten,
- FIG 5: eine Teilansicht eines Pols des Rotors,
- FIG 6: den prinzipiellen Verfahrensablauf der Herstellung eines Rotors,
- FIG 7: einen Teilquerschnitt eines mit Vergussmasse befüllten Pols des Rotors,
- FIG 8: einen Teilquerschnitt einer mit Vergussmasse befüllten Ausnehmung eines Pols des Rotors.

Es sei angemerkt, dass sich Begriffe wie "axial", "radial", "tangential" etc. auf die in der jeweiligen Figur bzw. im jeweils beschriebenen Beispiel zum Einsatz kommende Achse 7 beziehen. Mit anderen Worten beziehen sich die Richtungen axial, radial, tangential stets auf eine Achse 7 des Rotors 5 und damit auf die entsprechende Symmetrieachse des Stators 2. Dabei beschreibt "axial" eine Richtung parallel zur Achse 7, "radial" beschreibt eine Richtung orthogonal zur Achse 7, auf diese zu oder auch von ihr weg, und "tangential" ist eine Richtung, die in konstantem radialem Abstand zur Achse 7 und bei konstanter Axialposition kreisförmig um die Achse 7 herum gerichtet ist. Der Ausdruck "in Umfangsrichtung" ist mit "tangential" gleichzusetzen.

In Bezug auf eine Fläche, beispielsweise. eine Querschnittsfläche, beschreiben die Begriffe "axial", "radial", "tangential" etc. die Orientierung des Normalenvektors der Fläche, d.h. desjenigen Vektors, der senkrecht auf der betroffenen Fläche steht.

Unter dem Ausdruck "koaxiale Bauteile", bspw. koaxiale Komponenten wie Rotor 5 und Stator 2, werden hier Bauteile verstanden, die gleiche Normalenvektoren aufweisen, für die also die von den koaxialen Bauteilen definierten Ebenen parallel zueinander sind. Des Weiteren soll der Ausdruck beinhalten, dass die Mittelpunkte koaxialer Bauteile auf der gleichen Rotations- bzw. Symmetrieachse liegen. Diese Mittelpunkte können jedoch auf dieser Achse ggf. an verschiedenen axialen Positionen liegen und die genannten Ebenen also einen Abstand >0 voneinander haben. Der Ausdruck verlangt nicht zwangsläufig, dass koaxiale Bauteile den gleichen Radius haben.

Der Begriff "komplementär" meint im Zusammenhang mit zwei Komponenten, welche "komplementär" zueinander sind, dass ihre äußeren Formen derart ausgestaltet sind, dass die eine Komponente vorzugsweise vollständig in der zu ihr komplementären Komponente angeordnet werden kann, so dass sich die innere Oberfläche der einen Komponente und die äußere Oberfläche der anderen Komponente idealerweise lückenlos bzw. vollflächig berühren. Konsequenterweise ist also im Falle von zwei zueinander komplementären Gegenständen die äußere Form des einen Gegenstandes durch die äußere Form des anderen Gegenstandes festgelegt. Der Begriff "komplementär" könnte durch den Begriff "invers" ersetzt werden.

Der Übersichtlichkeit wegen werden in den Figuren teilweise in den Fällen, in denen Bauteile mehrfach vorhanden sind, häufig nicht sämtliche dargestellten Bauteile mit Bezugszeichen versehen.

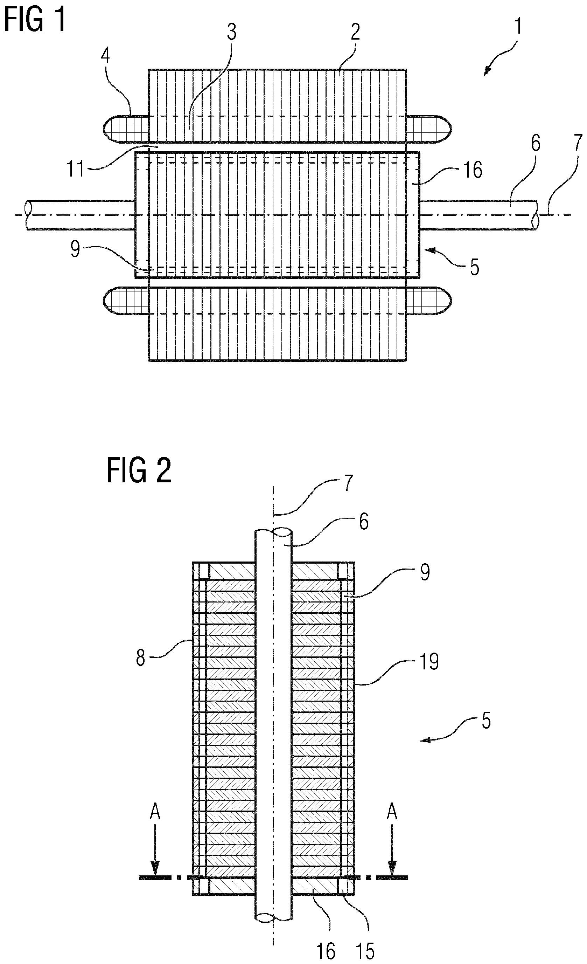

FIG 1 zeigt in einer prinzipielle Längsdarstellung eine dynamoelektrische Maschine 1, in diesem Fall eine permanenterregte Synchronmaschine. Diese permanenterregte Synchronmaschine weist einen Stator 2 auf, der in nicht näher dargestellten Nuten ein Wicklungssystem 3 aufweist, das an den Stirnseiten des Stators 2 einen Wickelkopf 4 ausbildet. Durch elektromagnetische Wechselwirkung über einen Luftspalt 11 wird durch ein bestromtes Wicklungssystem 3 ein Rotor 5 in Rotation um eine Achse 7 versetzt. Der Rotor 5, der koaxial zum Stator 2 angeordnet ist, weist in axial verlaufenden Ausnehmungen angeordnete Permanentmagnete 9 auf, die auch als vergrabene Permanentmagnete 9 bezeichnet werden. Die Bleche 8 des Rotors 5 sind paketiert und mit einer Welle 6 drehfest verbunden.

FIG 2 zeigt einen Rotor 5, dessen Blechpaket durch zwei Endscheiben paketiert ist, wobei zumindest eine Endscheibe als Verteilscheibe 16 ausgeführt ist. Diese Verteilscheibe 16 weist auf der einer Stirnseite des Rotorblechpakets zugewandten Seite zumindest einen Ringkanal 18 auf, der über eine Zuführung 15 füllbar ist. Über diese Zuführung 15 wird nunmehr der Ringkanal 18 und gegebenenfalls weitere Erweiterungen 17 mit einem thixotropischen Material unter Druck beaufschlagt.

Die Verteilscheibe 16 kann auch mehrere Zuführungen 15 aufweisen, um die zuführbare Menge an Vergussmaterial zu steigern.

Ausnehmungen im Blechpaket sind dabei Ausstanzungen der einzelnen Bleche, die paketiert, axial hintereinander angeordnet sind. Die Ausnehmungen weisen sowohl Taschen 10 als auch die Flusssperren 13 auf. Die Taschen 10 sind zur Aufnahme der oder des Permanentmagneten 9 vorgesehen. In den Raum der Ausnehmungen ragen optional Stege und/oder Haltenasen zur ergänzenden Fixierung und Halterung der Permanentmagnete 9 während der Fertigung und im Betrieb der dynamoelektrischen Maschine gegenüber Fliehkraftbeanspruchungen.

Idealerweise sind die Permanentmagnete 9 ohne Spalte zu den Blechen in den Ausnehmungen platziert - bilden also eine lückenlose und vollflächige Anlage. Eine derartige komplementäre Anordnung ist aber aus fertigungstechnischen Gründen nicht möglich. Es entstehen fertigungsbedingt Spalte zwischen den Permanentmagneten 9 und den Blechen 8, die geschlossen werden müssen.

Ein Paketieren der Bleche 8 kann auf einer Hilfswelle erfolgen. Ebenso ist es möglich die Bleche 8 zu verkleben. Ebenso ist Stanzpaketieren der Bleche 8 möglich, um ein Blechpaket des Rotors 5 zu erhalten in das die Permanentmagnete 9 einsetzbar sind.

Zusätzliches Paketieren erfolgt dann, wenn sich das Blechpaket auf der eigentlichen Welle 6 befindet. Dabei wird das Blechpaket mittels zweier Scheiben, insbesondere zumindest einer Verteilscheibe 16, zusammengepresst.

Das Blechpaket und/oder die Verteilscheiben werden vorzugsweise auf die Welle 6 geschrumpft. Ebenso sind andere Möglichkeiten vorhanden, das Drehmoment vom Blechpaket auf die Welle zu übertragen, wie Passfederverbindungen etc. Eine Paketierung des Blechpakets kann auch über Zugankerverbindungen erfolgen.

Die Verteilscheibe 16 weist auf der dem Blechpaket des Rotors 5 zugewandten Seite zumindest einen umlaufenden zum Blechpaket hin offenen Ringkanal 18 auf, der formschlüssig und dicht mit der Stirnseite des Blechpakets abschließt.

Auf der dem Blechpaket abgewandten Seite der Verteilscheibe 16 ist zumindest eine Injektionsöffnung, also eine Zuführung 15 vorgesehen, um den Ringkanal 18 zu speisen. Optional weist der Ringkanal 18 im Bereich einer Flusssperre eines Pols des Rotors Erweiterungen 17 auf, um ausreichend Vergussmasse für den jeweiligen Pol bereitstellen zu können.

Der Ringkanal 18 und optional dessen Erweiterung 17 schließen mit der Stirnseite des Blechpakets formschlüssig und dicht ab, um einen dementsprechenden Druck und damit die erforderlichen Scherkräfte aufbauen zu können.

Über die Zuführung 15 wird nunmehr die vorab, insbesondere in situ, gemischte Vergussmasse in das Blechpaket des Rotors 5 mit vorgebbarem Druck gedrückt.

Bei dieser als thixotropisches Material ausgeführte Vergussmasse stellt sich aufgrund der erhöhten Scherkräfte eine vergleichsweise geringe Viskosität ein, die der Vergussmasse ermöglicht in die Spalte und Ausnehmungen des Blechpakets einzudringen, die von Permanentmagneten 9 eingenommen werden. Bei dem Vergussprozess wird nunmehr die Vergussmasse unter vorgebbarem Druck reingepresst und aufgrund der geringeren Viskosität verteilt sich diese in den Flusssperren bzw. Spalten zwischen Permanentmagneten 9 im Blechpaket. Eine Überwachung des Drucks kann den Vorgang beenden, so dass die Vergussmasse in dem Moment, wenn die Scherkräfte reduziert werden (Druckreduktion), eine Viskositätssteigerung erfährt und somit der Vorgang des Vergießens abgebrochen wird bzw. werden kann. Sobald sich die Vergussmasse in den Spalten und Flusssperren um den Permanentmagneten 9 verteilt hat und eine weitere Ausdehnung in die Zwischenräume der Bleche ansteht, steigert sich der erforderliche Druck, der dann als Abbruchkriterium des Vergießens angezogen werden kann. Damit wird vermieden, dass die Vergussmasse beispielsweise radial zwischen die Bleche des Rotors 5 dringt und insbesondere an die Oberfläche 19 des Rotors 5 tritt.

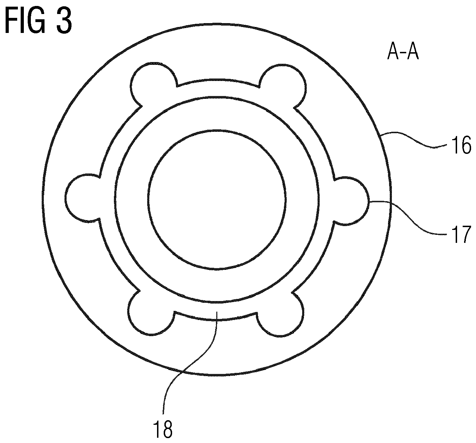

FIG 3 zeigt einen Schnitt durch die Verteilscheibe 16 bei der ein umlaufender Ringkanal 18 vorgesehen ist und der als optionale Ausbildung Erweiterungen 17 aufweist, die jeweils einen Pol des Rotors 5 mit einer Vergussmasse 20 versorgen.

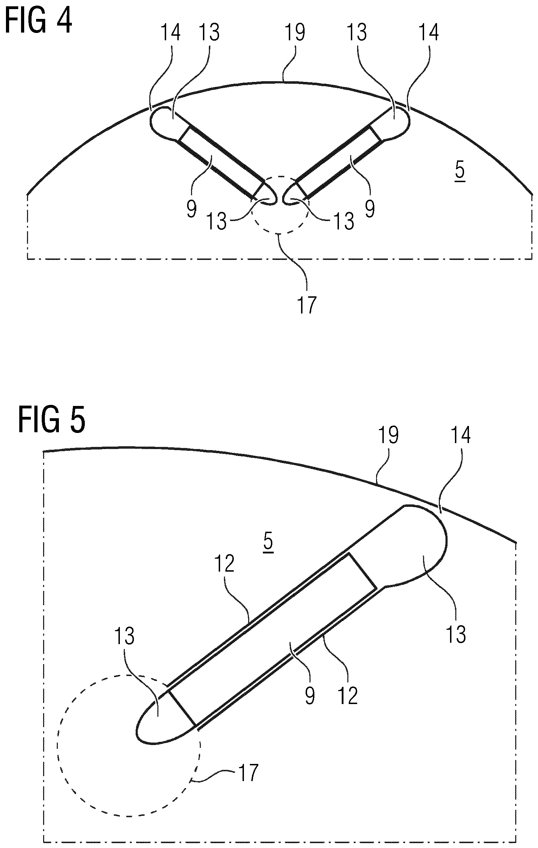

FIG 4 zeigt einen Pol des Rotors 5, der in diesem Fall durch zwei V-förmig angeordnete Permanentmagnete 9 gebildet ist. Die Pole des Rotors 5 können ebenso aus mehreren Permanentmagneten 9 gebildet sein, beispielsweise aus Doppel-V-förmigen Anordnungen, aus U-förmigen Anordnungen oder W-förmigen Anordnungen oder auch nur aus tangential angeordneten Permanentmagneten 9. Auch in axialer Richtung sind je nach axialer Länge des Rotors 5 mehrere Permanentmagnete 9 pro Ausnehmung vorgesehen.

Die Permanentmagneten 9 sind in Ausnehmungen angeordnet, wobei eine Ausnehmung sich aus Flusssperren 13, aus gegebenenfalls optionalen Halteelementen und aus Taschen 10 zusammensetzt. Die Taschen 10 sind dabei für die Aufnahme der Permanentmagnete 9 vorgesehen, die Flusssperren 13 und gegebenenfalls Halteelemente dienen lediglich der Fixierung bzw. der Optimierung des magnetischen Flusses im Blechpaket des Rotors 5.

Angedeutet ist dabei eine Erweiterung 17, die optional von der Verteilerscheibe 16 und dem Ringkanal 16 in den Pol des Rotors 5 mündet.

In diesem Fall würde die Vergussmasse 20 axial über die daran anschließenden Flusssperren 13 reingedrückt werden, wobei sich dabei dann die Vergussmasse 20 den weiteren Weg zwischen den Permanentmagneten 9 und den Blechen sucht, um in die radial außen liegenden Flusssperren 13 einzudringen und diese ebenfalls zu füllen. Durch Überwachung des Drucks und damit der Scherkräfte kann der Vorgang, sobald die "Ausnehmungen voll sind", abgebrochen werden. Dabei wird vermieden, dass insbesondere über die schmalen Stege 14 am radial äußeren Rand des Rotors die Vergussmasse 20 an die Oberfläche 19 des Rotors 5 tritt.

FIG 5 zeigt in einer detaillierteren Darstellung die Ausführungen nach FIG 4, wobei dort die Spalte 12 zwischen den Blechen des Rotors 5 und den Permanentmagneten 9 besser dargestellt sind. Dabei ist zu erkennen, dass die Spalte 12 zwischen den Blechen und den Permanentmagneten 9 zumindest abschnittsweise Ausdehnungen aufweisen können, um den Füllvorgang durch die Vergussmasse 20 zu erleichtern.

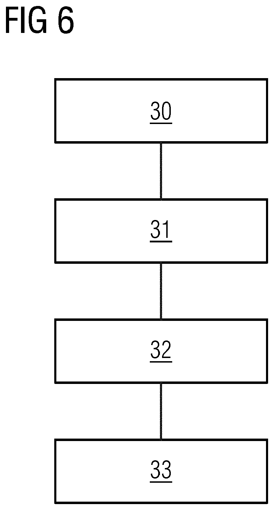

FIG 6 zeigt die prinzipiellen Schritte des Verfahrens zur Herstellung des Rotors 5, insbesondere der permanenterregten dynamoelektrischen Maschine 1 durch folgende Schritte:
- Schritt 30: Paketieren des Blechpakets des Rotors 5, insbesondere Stanzpaketieren mit im Wesentlichen axial verlaufenden Ausnehmungen zur Aufnahme der Permanentmagnete 9, wobei die Ausnehmungen Taschen 10, Halteelemente und Flusssperren 13 aufweisen,
- Schritt 31: axiales Einsetzen der Permanentmagnete 9 in die Taschen 10 der Ausnehmungen,
- Schritt 32: zusätzliches axiales Paketieren des Blechpakets mittels zumindest einer Verteilscheibe 16 an der Stirnseite des Blechpakets, wobei die Verteilscheibe 16 zumindest eine Zuführung 15 auf der dem Blechpaket abgewandten Seite und zumindest einen Ringkanal 18 auf der dem Blechpaket zugewandten Seite aufweist,
- Schritt 33: Zuführen der thixotropischen Vergussmasse 20 unter einem vorgebbaren Druck über die Zuführung 15 der Verteilscheibe 16, über den Ringkanal 18 in den Raum, den die Permanentmagnete 9 in den Ausnehmungen nicht einnehmen, solange, bis zumindest sämtliche axial verlaufende Spalte 12 ausgefüllt sind oder bis die Ausnehmungen "voll" sind.

Die thixotropische Vergussmasse 20 wird in einem statischen oder dynamischen Mischrohr in situ gemischt.

Dabei kann der Rotor 5 in einer Hilfsvorrichtung derart positioniert werden, dass insbesondere die axialen Spalte 12 achsparallel mittels der aufsteigender Vergussmasse 20 gefüllt werden.

Während des Füllvorganges mit Vergussmasse wird eine Überwachung der Füllung des Rotors 5 über eine Detektion des dynamischen versus statischen Drucks der Vergussmasse 20 vorgenommen.

Vor allem wenn der Druck der Vergussmasse 20 unterschiedlich zum Umgebungsdruck ist, also darunter oder darüber liegt, ist es vorteilhaft, wenn die Verteilscheibe 16, vor allem aber der Ringkanal 18 formschlüssig mit der Stirnseite des Rotors 5 abschließt, um eine verlustfreie Einspeisung der Vergussmasse 20 in den Rotor 5 zu gewährleisten.

Als Basisharzmaterial der Vergussmasse 20 ist ein Zwei-Komponenten-Reaktivharz vorgesehen, in dem in einer vorgebbaren Menge wärmeleitfähige und/oder eine Gelierzeit der Vergussmasse beeinflussende Additive vorhanden bzw. zusetzbar sind.

Dabei kann das Zwei-Komponenten-Reaktivharz auf Basis von Epoxy/Amin oder Polyurethan/Isocyanat ausgebildet sein. Zusätzlich können wärmeleitende Additive wie Quarzmehl und/oder Quarzgut, und/oder BN, und/oder Atox und/oder Kreide zugesetzt werden, die in Summe oder einzeln bis zu 40 Vol.% der Vergussmasse 20 ausmachen. Damit wird eine Wärmeanbindung der Permanentmagnete 9 zu dem Blechpaket geschaffen.

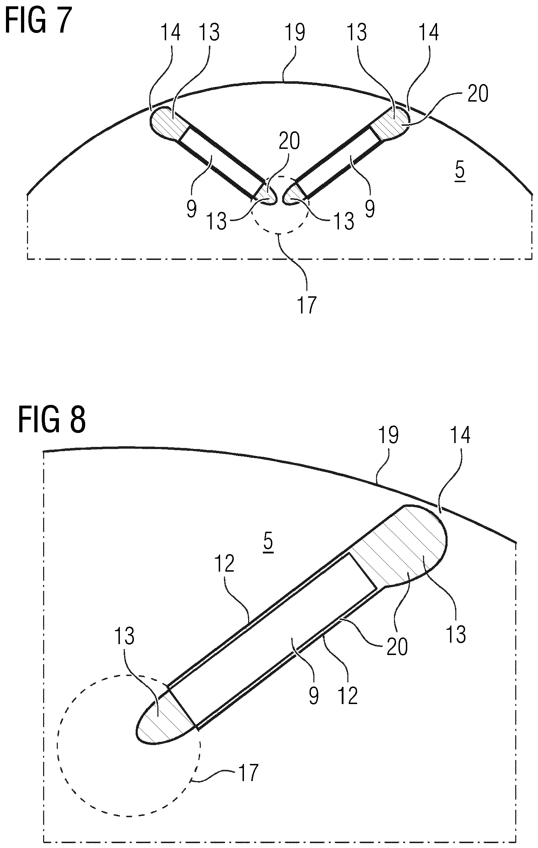

FIG 7 und FIG 8 zeigen Ausnehmungen des Blechpakets, die durch die Vergussmasse 20 gefüllt sind. Dabei sind die Spalte 12 und die Flusssperren 13 im Blechpaket mit Vergussmasse 20 gefüllt, aber nicht die Zwischenräume zwischen den einzelnen Blechen 8, die sich senkrecht zur Achse 7 erstrecken.

Die Herstellung eines derartigen Rotors 5 wird durch das erfindungsgemäße Verfahren mit der thixotropischen Vergussmasse 20 besonders einfach.

Eine permanenterregte Synchronmaschine mit einem erfindungsgemäßen Rotor 5, dessen Permanentmagnete 9 vergraben angeordnet und mit einer derartigen thixotropischen Vergussmasse fixiert sind, erreicht einen vergleichsweise hohen Wirkungsgrad und ist demnach für viele Arbeitsmaschinen, vor allem denen im Dauerbetrieb, besonders geeignet. Diese fungieren beispielsweise als Antriebe von Kompressoren, Verdichtern, Lüftern und als Antriebe in der Nahrungsmittelindustrie und bei maritimen Anwendungen.

Dadurch, dass die Oberfläche des Rotors frei von Rückständen von Vergussmassen oder Klebern ist, kann auch der radiale Luftspaltdicke zwischen Stator 2 und Rotor 5 reduziert werden.

Damit stellt sich eine vergleichsweise höhere Leistungsdichte bei gleichem Volumen des Antriebs ein. Damit kann u.a. die permanenterregte Synchronmaschine vergleichsweise nahe an der Arbeitsmaschine angeordnet werden und somit auch in das Gehäuse einer der oben genannten Arbeitsmaschine als Direktantrieb integriert werden.

Mit der thixotropischen Vergussmasse lassen sich auch die Flusssperren von Rotoren einer Reluktanzmaschinen ausgießen, um so einen stabilen und kompakten Rotor zu erhalten.

## Patentansprüche

1. Verfahren zur Herstellung eines Rotors (5), insbesondere einer permanenterregten dynamoelektrischen Maschine (1) durch folgende Schritte:
- Paketieren eines Blechpakets des Rotors (5), insbesondere Stanzpaketieren mit im Wesentlichen axial verlaufenden Ausnehmungen zur Aufnahme von Permanentmagneten (9), wobei die Ausnehmungen Taschen (10), Halteelemente und Flusssperren (13) aufweisen,
- Einbringen der Permanentmagneten (9) in die Taschen (10),
- zusätzliches axiales Paketieren des Blechpakets mittels zumindest einer Verteilscheibe (16) an einer Stirnseite des Blechpakets, wobei die Verteilscheibe (16) zumindest eine Zuführung (15) und zumindest einen Ringkanal (18) aufweist,
- Zuführen einer thixotropischen Vergussmasse (20) unter einem vorgebbaren Druck über die Zuführung (15) der Verteilscheibe (16), über den Ringkanal (18) in den Raum, den die Permanentmagnete (9) in den Ausnehmungen nicht einnehmen, solange, bis zumindest sämtliche axial verlaufende Spalte (12) ausgefüllt sind oder bis die Ausnehmungen "voll" sind.

2. Verfahren zur Herstellung eines Rotors (5) nach Anspruch 1, **dadurch gekennzeichnet, dass** die thixotropische Vergussmasse (20) in einem statischem oder dynamischen Mischrohr in situ gemischt wird.

3. Verfahren zur Herstellung eines Rotors (5) nach Anspruch 1 oder 2, **dadurch gekennzeichnet,**
**dass** der Rotor (5) in einer Hilfsvorrichtung derart positioniert wird, dass insbesondere die axialen Spalte (12) achsparallel mittels aufsteigender Vergussmasse (20) gefüllt werden.

4. Verfahren zur Herstellung eines Rotors (5) nach Anspruch 1, 2 oder 3, **dadurch gekennzeichnet, dass** eine Überwachung der Füllung des Rotors (5) über eine Detektion eines dynamischen versus statischen Drucks der Vergussmasse (20) erfolgt.

5. Verfahren zur Herstellung eines Rotors (5) nach einem der vorhergehenden Ansprüche, **dadurch gekenn**- **zeichnet**, dass eine Wuchtung des Rotors (5) an der oder den Verteilscheiben (16) vorgenommen wird.

6. Verfahren zur Herstellung eines Rotors (5) nach einem der vorhergehenden Ansprüche, **dadurch gekenn**- **zeichnet**, dass pro Pol des Rotors (5) in der Verteilscheibe (16) eine Erweiterung (17) des Ringkanals (18) vorgesehen ist, um eine höhere axiale Einspeisung der Vergussmasse in die Ausnehmung zu ermöglichen.

7. Verfahren zur Herstellung eines Rotors (5), nach einem der vorhergehenden Ansprüche, **dadurch gekenn- zeichnet**, dass die Verteilscheibe (16), insbesondere der Ringkanal (18) abschnittsweise formschlüssig mit der Stirnseite des Rotors (5) abschließt, um eine verlustfreie Einspeisung in den Rotor (5) zu gewährleisten.

8. Vergussmasse zur Fixierung von Permanentmagneten (9) in einem Rotor (5) einer permanenterregten Synchronmaschine,
**dadurch gekennzeichnet, dass** als Basisharzmaterial ein Zwei-Komponenten-Reaktivharz vorgesehen ist, in dem in einer vorgebbaren Menge wärmeleitfähige und/oder eine Gelierzeit der Vergussmasse beeinflussende Additive vorhanden sind.

9. Vergussmasse (20) zur Fixierung von Permanentmagneten (9) in einem Rotor (5) einer permanenterregten Synchronmaschine nach Anspruch 8, **dadurch gekennzeichnet, dass** das Zwei-Komponenten-Reaktivharz auf Basis von Epoxy/Amin oder Polyurethan/Isocyanat ausgebildet ist.

10. Vergussmasse (20) zur Fixierung von Permanentmagneten (9) in einem Rotor (5) einer permanenterregten Synchronmaschine nach Anspruch 8 oder 9, **dadurch gekennzeichnet, dass** wärmeleitende Additive Quarzmehl und/oder Quarzgut, und/oder BN, und/oder Atox und/oder Kreide in der Vergussmasse (20) vorgesehen sind und in Summe oder einzeln bis zu 40 Vol.% der Vergussmasse (20) ausmachen.

11. Rotor (5) einer permanenterregten Synchronmaschine hergestellt nach einem Verfahren nach einem oder mehreren der Ansprüche 1 bis 7, **dadurch gekennzeichnet, dass** die Oberfläche (19) des Rotors (5) frei von einer Lackierschicht oder Vergussmasse (20) ist und die axial verlaufenden Ausnehmungen mit Permanentmagneten (9) oder mit Vergussmasse (20) gefüllt sind, und Endscheiben und/oder Verteilscheiben (16) aufweist.

12. Rotor (5) einer permanenterregten Synchronmaschine (1) nach Anspruch 11, **dadurch gekennzeichnet, dass** zumindest eine Verteilscheibe (16) als Wuchtscheibe einsetzbar ist, indem an ihrer von der Stirnseite des Blechpakets des Rotors (15) abgewandten Stirnseiten zusätzliche Wuchtgewichte anbringbar sind oder Material aus der Verteilscheibe (16) entnehmbar ist.

13. Permanenterregte dynamoelektrische Maschine (1), insbesondere permanenterregte Synchronmaschine (1) mit einem Rotor (5) nach einem der Ansprüche 11 oder 12.

14. Verwendung einer permanenterregten Synchronmaschine (1) nach Anspruch 13, insbesondere als integrierter Direktantrieb bei Kompressorantrieben, Verdichterantrieben, Lüfterantrieben und als Antriebe in der Nahrungsmittelindustrie und bei maritimen Anwendungen.
